# EUROPÄISCHE PATENTANMELDUNG

(11) **EP 3 840 097 A1**
(43) Veröffentlichungstag der Anmeldung: **23.06.2021**
(21) Anmeldenummer: 20205967.1
(22) Anmeldetag: 05.11.2020
(51) Int. Cl.: H01M 10/04, H01M 10/0587, H01M 50/107, H01M 50/531

(54) **BATTERIEZELLE**

(30) Priorität: 19.12.2019 DE 102019135055
(71) Anmelder: Einhell Germany AG, 94405 Landau / Isar (DE)
(72) Erfinder: Dr. Thannhuber, Markus, 94405 Landau (DE)
(74) Vertreter: Hofstetter, Schurack & Partner

(57) **Zusammenfassung**

Ein Herstellungsverfahren zur Herstellung einer Batteriezelle (1) mit geringer Impedanz beinhaltet das Anordnen eines elektrisch leitfähigen ersten Kontaktmaterials (4) im Inneren eines Zellengehäuses (2) auf einer Bodenfläche (3). Ein Folienwickel (7) wird mit einem axialen Ende des Folienwickels (7) voran in das Zellengehäuse (2) eingeführt, sodass eine erste Elektrodenfolie (8) in direktem Kontakt mit dem ersten Kontaktmaterial (4) steht. Das erste Kontaktmaterial (4) wird stoffschlüssig mit der ersten Elektrodenfolie (8) verbunden, um die erste Elektrodenfolie (8) elektrisch mit dem Zellengehäuse (2) zu verbinden.

## Beschreibung

Die vorliegende Erfindung betrifft ein Herstellungsverfahren für eine Batteriezelle sowie eine entsprechende Batteriezelle.

Batteriezellen, insbesondere Zellen von Lithiumionenakkumulatoren, weisen häufig Folienwickel auf, in denen zwei Folien, welche die Elektroden der Zelle darstellen, durch Separatoren voneinander getrennt aufgewickelt sind und die sich in einem Zellengehäuse befinden. Um die Elektrodenfolien elektrisch mit den entsprechenden Teilen des Zellengehäuses zu verbinden, werden in bekannten Batteriezellen Stromabnehmerstreifen (englisch "Taps") verwendet, die mit den Elektrodenfolien und ebenso mit den entsprechenden Gehäuseteilen verlötet oder verschweißt werden. Die Stromabnehmerstreifen werden dabei stirnseitig aus den aufgewickelten Folienwickeln herausgeführt um mit dem Zellengehäuse verbunden zu werden.

Innerhalb eines Folienwickels ist die Wärmeabfuhr in radialer Richtung in der Regel gering, sodass die Stromabnehmerstreifen auch einen großen Anteil am thermischen Batteriemanagement haben.

Ein Nachteil dieser bekannten Batteriezellen ist jedoch, dass durch die bauartbedingten Verbindungsstellen zwischen Gehäuse und Stromabnehmerstreifen sowie zwischen Stromabnehmerstreifen und zugehöriger Elektrodenfolie die Gesamtimpedanz der Batteriezelle erhöht ist. Insbesondere bei Hochleistungsbatteriezellen ist eine möglichst geringe Gesamtimpedanz jedoch von hoher Bedeutung. Auch kleine Steigerungen in der Gesamtimpedanz, wie sie beispielsweise durch die beschriebenen Effekte zustande kommen, wirken sich negativ aus.

Es ist daher eine Aufgabe der vorliegenden Erfindung, ein verbessertes Konzept für eine Batteriezelle anzugeben, mit dem die Gesamtimpedanz der Batteriezelle verringert werden kann, insbesondere ohne die Wärmeabfuhr zu verschlechtern.

Erfindungsgemäß wird diese Aufgabe gelöst durch den jeweiligen Gegenstand der unabhängigen Patentansprüche. Weitere Ausführungsformen sind Gegenstand der abhängigen Ansprüche.

Das verbesserte Konzept beruht auf der Idee, einen Folienwickel an einem axialen Ende über ein elektrisch leitfähiges Kontaktmaterial direkt mit den entsprechenden Kontaktflächen im Inneren des Zellengehäuses elektrisch und stoffschlüssig zu verbinden.

Gemäß dem verbesserten Konzept wird ein Herstellungsverfahren zur Herstellung einer Batteriezelle angegeben. Dazu wird ein elektrisch leitfähiges erstes Kontaktmaterial im Inneren eines Zellengehäuses auf einer Bodenfläche des Zellengehäuses angeordnet. Danach wird ein Folienwickel mit einem ersten axialen Ende des Folienwickels voran in das Zellengehäuse eingeführt, sodass eine erste Elektrodenfolie des Folienwickels an dem ersten axialen Ende in direktem Kontakt mit dem ersten Kontaktmaterial steht. Danach wird das erste Kontaktmaterial stoffschlüssig mit der ersten Elektrodenfolie verbunden, um die erste Elektrodenfolie elektrisch mit dem Zellengehäuse, insbesondere der Bodenfläche, zu verbinden.

Insbesondere kann das Zellengehäuse einen zylinderförmigen Rumpfkörper aufweisen, der insbesondere einen zylinderförmigen Mantel und einen Boden aufweist, welcher insbesondere der Basis des Zylinders entspricht und dessen im Inneren des Zellgehäuses liegende Seite der Bodenfläche entspricht.

An einem dem Boden gegenüberliegenden Ende des zylinderförmigen Mantels ist der Rumpfkörper beispielsweise geöffnet, um den Folienwickel einführen zu können. Eine Deckelkomponente des Zylindergehäuses kann beispielsweise verwendet werden, um das Zellengehäuse beziehungsweise den Rumpfkörper an diesem Ende zu schließen.

Der Folienwickel ist insbesondere ebenfalls zylinderförmig oder im Wesentlichen zylinderförmig, insbesondere kreiszylinderförmig, ausgestaltet.

Das erste Kontaktmaterial ist, insbesondere nach der stoffschlüssigen Verbindung mit dem ersten Ende des Folienwickels, elektrisch und beispielsweise thermisch leitfähig. Nichtsdestotrotz kann das erste Kontaktmaterial auch elektrisch nicht leitfähige Komponenten, beispielsweise ein Polymer oder einen sonstigen Kunststoff, enthalten.

Dass die erste Elektrodenfolie in direktem Kontakt mit dem ersten Kontaktmaterial steht, kann insbesondere derart verstanden werden, dass zwischen dem ersten Kontaktmaterial und der ersten Elektrodenfolie keine weitere Komponente zur Kontaktierung angeordnet ist. Insbesondere erfolgt die elektrische Kontaktierung der Elektrodenfolie mit der Bodenfläche ausschließlich durch das erste Kontaktmaterial.

Die erste Elektrodenfolie weist insbesondere eine erste Trägerfolie auf, die mit einem ersten Aktivmaterial wenigstens zum Teil beschichtet ist, insbesondere beidseitig.

Insbesondere steht die erste Trägerfolie, also ein nicht mit dem ersten Aktivmaterial beschichteter Bereich der Trägerfolie, mit dem ersten Kontaktmaterial in direktem Kontakt, nachdem der Folienwickel in das Zellengehäuse eingeführt wurde. Insbesondere wird das erste Kontaktmaterial stoffschlüssig mit dem Bereich der ersten Trägerfolie verbunden, der nicht mit dem ersten Aktivmaterial verbunden ist, um die erste Trägerfolie elektrisch mit dem Zellengehäuse zu verbinden.

Der Begriff "axial" kann hier und im Folgenden beispielsweise bezogen auf eine Wickelachse des Folienwickels und/oder bezogen auf eine Symmetrieachse des zylinderförmigen Mantels des Zellengehäuses verstanden werden, wobei diese beiden Achsen im fertiggestellten Zustand der Batteriezelle beispielsweise näherungsweise parallel zueinander oder näherungsweise identisch sind.

Durch die stoffschlüssige Verbindung des ersten Kontaktmaterials mit der ersten Elektrodenfolie wird insbesondere auch die Bodenfläche, also das Zellengehäuse, stoffschlüssig mit dem ersten Kontaktmaterial verbunden.

Nach einem Herstellungsverfahren gemäß dem verbesserten Konzept wie beschrieben sind außer dem Folienwickel selbst und dem ersten Kontaktmaterial keine weiteren Komponenten erforderlich, um den Folienwickel an dem ersten axialen Ende elektrisch mit dem Zellengehäuse zu verbinden. Die elektrische Verbindung mittels des ersten Kontaktmaterials gewährleistet zudem beispielsweise eine effiziente Wärmeabfuhr durch eine entsprechende thermische Leitfähigkeit des ersten Kontaktmaterials.

Insbesondere sind keine Stromabnehmerstreifen, die im Folgenden auch als Taps bezeichnet werden, erforderlich, welche zum Einen an der ersten Elektrodenfolie und zum Anderen auch an dem Zellengehäuse befestigt werden müssten und damit eine höhere Gesamtimpedanz zur Folge hätten.

Die Gesamtimpedanz der durch das Herstellungsverfahren gemäß dem verbesserten Konzept hergestellten Batteriezelle ist daher reduziert, ohne Einbußen bei der Wärmeabfuhr hinnehmen zu müssen.

Durch das verbesserte Konzept ist es auch nicht erforderlich, nach dem Einführen des Folienwickels in das Zellengehäuse ein Lötwerkzeug oder ähnliches durch den Folienwickel hindurch oder an dem Folienwickel vorbeizuführen, um das erste axiale Ende mit der Bodenfläche verlöten zu können beziehungsweise über entsprechende Taps oder sonstige Kontaktkomponenten mit der Bodenfläche verbinden zu können.

Gemäß zumindest einer Ausführungsform des Herstellungsverfahrens wird das erste Kontaktmaterial in einem flüssigen oder pastösen Zustand in das Zellengehäuse eingebracht. Das erste Kontaktmaterial kann also mittels einer Spritze oder Düse auf die Bodenfläche gebracht werden.

Gemäß zumindest einer Ausführungsform wird das erste Kontaktmaterial als festes Plättchen, beispielsweise als Lötplättchen, also als Plättchen aus einem Lotmaterial, auch als Lotvorlage bezeichnet, in das Zellengehäuse eingebracht.

Sowohl das Einbringen des Kontaktmaterials als Paste oder Flüssigkeit als auch das Einbringen des ersten Kontaktmaterials als Plättchen erlauben eine nachträgliche stoffschlüssige Verbindung des ersten Kontaktmaterials mit dem Folienwickel beziehungsweise der ersten Elektrodenfolie durch externe Mittel, beispielsweise durch Erhitzen von außen.

Die erste Trägerfolie kann insbesondere als Metallfolie, beispielsweise als Kupferfolie oder Aluminiumfolie, ausgestaltet sein.

Gemäß zumindest einer Ausführungsform werden, insbesondere um den Folienwickel vor dem Einführen des Folienwickels in das Zellengehäuse zu fertigen, die erste Elektrodenfolie und eine zweite Elektrodenfolie des Folienwickels übereinander angeordnet, sodass die erste Elektrodenfolie an einer dem ersten axialen Ende des Folienwickels entsprechenden Seite über die zweite Elektrodenfolie übersteht. Die übereinander angeordneten Elektrodenfolien werden dann gemeinsam aufgewickelt, um den Folienwickel zu fertigen.

Optional können die Elektrodenfolien derart übereinander angeordnet werden, dass die zweite Elektrodenfolie an einer einem zweiten axialen Ende des Folienwickels, welches dem ersten axialen Ende des Folienwickels gegenüberliegt, entsprechenden Seite über die erste Elektrodenfolie übersteht.

Bei der Anordnung der Elektrodenfolien übereinander befindet sich insbesondere ein Separator zwischen der ersten und der zweiten Elektrodenfolie. Ein weiterer Separator ist beispielsweise auf einer dem Separator beziehungsweise der zweiten Elektrodenfolie abgewandten Seite der ersten Elektrodenfolie angeordnet oder auf einer dem Separator beziehungsweise der ersten Elektrodenfolie abgewandten Seite der zweiten Elektrodenfolie.

Das Aufwickeln der übereinander angeordneten Elektrodenfolien, insbesondere der Elektrodenfolien und der Separatoren, erfolgt beispielsweise durch Aufwickeln auf einen Wickeldorn.

In solchen Ausführungsformen ist die zweite Elektrodenfolie in dem aufgewickelten Folienwickel daher von dem ersten axialen Ende des Folienwickels entfernt angeordnet, sodass die zweite Elektrodenfolie nicht in elektrischem Kontakt mit dem ersten Kontaktmaterial steht, insbesondere nachdem das erste Kontaktmaterial mit der ersten Elektrodenfolie verbunden wurde.

Entsprechend kann auch die erste Elektrodenfolie von dem zweiten axialen Ende des Folienwickels beabstandet sein. Auch hier kann also der Folienwickel direkt durch die zweite Elektrodenfolie mit dem Zellengehäuse und gegebenenfalls mit einem zweiten elektrisch leitfähigen Kontaktmaterial verbunden werden.

Insbesondere ermöglicht es diese Anordnung der Elektrodenfolien in dem Folienwickel, auf Taps zur Kontaktierung des Folienwickels zu verzichten und damit eine reduzierte Impedanz zu ermöglichen.

Gemäß zumindest einer Ausführungsform des Herstellungsverfahrens wird der Folienwickel derart bereitgestellt, dass die erste Elektrodenfolie an dem ersten axialen Ende des Folienwickels über die zweite Elektrodenfolie übersteht. Optional kann der Folienwickel derart bereitgestellt werden, dass die zweite Elektrodenfolie an dem zweiten axialen Ende des Folienwickels über die erste Elektrodenfolie übersteht.

Mit anderen Worten sind in solchen Ausführungsformen die Schritte zur Fertigung des Folienwickels nicht notwendigerweise Bestandteil des Herstellungsverfahrens nach dem verbesserten Konzept.

Gemäß zumindest einer Ausführungsform ist die erste Trägerfolie in dem Bereich, in dem sie über die zweite Elektrodenfolie übersteht frei von dem ersten Aktivmaterial.

Gemäß zumindest einer Ausführungsform ist die zweite Trägerfolie in einem Bereich, in dem sie über die erste Trägerfolie übersteht, frei von dem zweiten Aktivmaterial.

Dadurch kann eine bessere, also insbesondere zuverlässigere und stabilere, Verbindung der Elektrodenfolien mit dem Zellengehäuse erfolgen.

Gemäß zumindest einer Ausführungsform wird das erste Kontaktmaterial, insbesondere nachdem der Folienwickel in das Zellengehäuse eingeführt wurde, von außerhalb des Zellengehäuses erhitzt, um das erste Kontaktmaterial stoffschlüssig mit der ersten Elektrodenfolie zu verbinden.

Dass die Erhitzung von außerhalb des Zellengehäuses erfolgt, kann insbesondere derart verstanden werden, dass zum Erhitzen des ersten Kontaktmaterials kein Werkzeug und keine Wärmequelle in das Innere des Zellengehäuses eingeführt werden. Stattdessen wird eine Heizvorrichtung oder ein Heizwerkzeug außerhalb des Gehäuses, beispielsweise in der Nähe des Bodens des Zellengehäuses, angeordnet, um das erste Kontaktmaterial von außerhalb des Zellengehäuses, insbesondere indirekt, zu erhitzen.

Die Heizvorrichtung beziehungsweise das Heizwerkzeug kann beispielsweise eine Vorrichtung zum induktiven Erhitzen des ersten Kontaktmaterials und/oder des Zellengehäuses beinhalten oder eine Heizplatte auf der das Zellengehäuse angeordnet wird, beispielsweise mit dem Boden auf die Heizplatte gestellt wird.

Dadurch wird eine besonders einfache Herstellung der Batteriezelle ermöglicht. Insbesondere dadurch, dass kein Werkzeug in das Gehäuse eingeführt werden muss, besteht nicht die Gefahr, dass der Folienwickel mechanisch beschädigt wird.

Die Heizvorrichtung beziehungsweise das Heizwerkzeug kann auch eine Vorrichtung zum Erzeugen von Heißluft beinhalten, um das erste Kontaktmaterial zu erhitzen.

Die Heizvorrichtung oder das Heizwerkzeug kann eine Vorrichtung zum Erzeugen von Infrarotstrahlung zum Erhitzen des ersten Kontaktmaterials enthalten.

Die Heizvorrichtung kann auch ein Flüssigkeitsbad zum Erhitzen des ersten Kontaktmaterials beinhalten.

Gemäß zumindest einer Ausführungsform werden die erste Elektrodenfolie beziehungsweise das Zellengehäuse mittels Ultraschall mit dem ersten Kontaktmaterial stoffschlüssig verbunden.

Dabei kann das Erhitzen beispielsweise durch Ultraschall unterstützt werden oder das Verbinden mittels Ultraschall ersetzt das Erhitzen.

Gemäß zumindest einer Ausführungsform, insbesondere einer Ausführungsform in der das erste Kontaktmaterial erhitzt wird, um das erste Kontaktmaterial stoffschlüssig mit der ersten Elektrodenfolie zu verbinden, wird das erste Kontaktmaterial beziehungsweise die erste Elektrodenfolie beziehungsweise der Folienwickel von außerhalb des Zellengehäuses gekühlt, insbesondere aktiv gekühlt, beispielsweise mittels einer externen Kühlvorrichtung.

Durch das Kühlen wird verhindert, dass sich die Aktivmaterialien und/oder die Separatoren des Folienwickels zu stark erhitzen und gegebenenfalls beschädigt werden.

Beispielsweise kann die Erhitzung nach einer vorgegebenen Heizzeit beendet werden. Die Kühlung kann am Ende der Heizzeit oder nach Ende der Heizzeit, insbesondere unmittelbar danach, erfolgen.

Gemäß zumindest einer Ausführungsform beinhaltet das erste Kontaktmaterial eine Metallkomponente.

Gemäß zumindest einer Ausführungsform wird die Metallkomponente durch das Erhitzen des ersten Kontaktmaterials geschmolzen oder gesintert.

Wird das erste Kontaktmaterial beispielsweise in festem Zustand in das Zellengehäuse eingebracht, so kann das erste Kontaktmaterial durch das Erhitzen geschmolzen werden. Erstarrt das erste Kontaktmaterial dann wieder, ist es stoffschlüssig mit der ersten Elektrodenfolie verbunden.

Wir das erste Kontaktmaterial pastös oder flüssig in das Zellengehäuse eingebracht, kann der Folienwickel, insbesondere die erste Elektrodenfolie, beispielsweise in das erste Kontaktmaterial gesteckt werden und durch das Erhitzen können beispielsweise Metallpartikel der Metallkomponente aufgeschmolzen oder gesintert werden und/oder das erste Kontaktmaterial kann entbindert oder von Lösemittel befreit werden.

Handelt es sich bei dem ersten Kontaktmaterial um ein festes Lotmaterial, also insbesondere ein Lotplättchen oder eine feste Lotvorlage, kann das erste Kontaktmaterial durch das Erhitzen mit der ersten Elektrodenfolie beziehungsweise mit dem Zellengehäuse verlötet werden.

Handelt es sich bei dem ersten Kontaktmaterial um eine Lotpaste, kann durch das Erhitzen beispielsweise ein Wiederverflüssigungs-Lötprozess (englisch: "reflow soldering") durchgeführt werden.

Gemäß zumindest einer Ausführungsform enthält das erste Kontaktmaterial eine Polymerkomponente.

Gemäß zumindest einer Ausführungsform wird die Polymerkomponente durch das Erhitzen des ersten Kontaktmaterials von außerhalb des Zellengehäuses geschmolzen.

Beispielsweise kann das erste Kontaktmaterial die Polymerkomponente, die auch als Polymermatrix oder Polymerträgermatrix bezeichnet werden kann, ein elektrisch leitfähiges Pulver oder elektrisch leitfähige Partikel aufnehmen, beziehungsweise diese Partikel können in dem Polymermaterial eingebettet sein. Die elektrisch leitfähigen Partikel können beispielsweise Metall oder Partikel aus einem Kohlenstoffmaterial beinhalten, beispielsweise Graphit, Graphen oder Kohlenstoffnanoröhrchen. Alternativ oder zusätzlich kann die Polymerkomponente dotiert sein, um die elektrische Leitfähigkeit zu erzielen.

Durch das Erhitzen und Aufschmelzen der Polymerkomponente kann die erste Elektrodenfolie dann mit dem ersten Kontaktmaterial stoffschlüssig verbunden werden.

Die elektrisch leitfähigen Partikel können, beispielsweise wenn es sich um Metallpartikel handelt, durch das Erhitzen ebenfalls geschmolzen, teilweise geschmolzen oder gesintert werden.

Gemäß zumindest einer Ausführungsform wird durch das Erhitzen eine Polymerisierungsreaktion der Polymerkomponente initiiert.

Gemäß zumindest einer Ausführungsform ist das erste Kontaktmaterial als Klebstoff, insbesondere als elektrisch leitfähiger Klebstoff ausgestaltet.

Gemäß zumindest einer Ausführungsform wird der Klebstoff durch das Erhitzen gehärtet, insbesondere abgebunden oder chemisch gehärtet.

Gemäß dem verbesserten Konzept wird auch ein weiteres Herstellungsverfahren für eine Batteriezelle angegeben. Gemäß dem weiteren Herstellungsverfahren wird ein elektrisch leitfähiges zweites Kontaktmaterial auf einer inneren Deckelfläche einer Deckelkomponente eines Zellengehäuses zum Verschließen des Zellengehäuses angeordnet. Danach wird eine zweite Elektrodenfolie eines Folienwickels an einem zweiten axialen Ende des Folienwickels, welches insbesondere einem ersten axialen Ende des Folienwickels gegenüber angeordnet ist, in direkten Kontakt mit dem zweiten Kontaktmaterial gebracht. Danach wird das zweite Kontaktmaterial stoffschlüssig mit der zweiten Elektrodenfolie verbunden, um die zweite Elektrodenfolie elektrisch mit der Deckelkomponente zu verbinden.

Die innere Deckelfläche der Deckelkomponente befindet sich insbesondere innerhalb des Zellengehäuses, nachdem der Rumpfkörper des Zellengehäuses durch die Deckelkomponente des Zellengehäuses verschlossen wurde.

Gemäß zumindest einer Ausführungsform des weiteren Herstellungsverfahrens wird das zweite Kontaktmaterial von außerhalb der Deckelkomponente erhitzt, um das zweite Kontaktmaterial stoffschlüssig mit der zweiten Elektrodenfolie zu verbinden.

Sämtliche Ausführungsformen des weiteren Herstellungsverfahrens nach dem verbesserten Konzept können mit sämtlichen Ausführungsformen des Herstellungsverfahrens nach dem verbesserten Konzept kombiniert werden.

Insbesondere können die oben beschriebenen Verfahrensschritte des weiteren Herstellungsverfahrens ausgeführt werden, bevor die Verfahrensschritte des Herstellungsverfahrens nach dem verbesserten Konzept ausgeführt werden.

Sämtliche Ausführungsformen, die für das Herstellungsverfahren nach dem verbesserten Konzept beschrieben wurden, können analog auf das weitere Herstellungsverfahren übertragen werden. Dabei nehmen die erste und die zweite Elektrodenfolie vertauschte Rollen ein, ebenso wie das erste und das zweite axiale Ende des Folienwickels, das erste und das zweite Kontaktmaterial sowie die Bodenfläche und die Deckelfläche.

Mit anderen Worten kann die zweite Elektrodenfolie derart mittels des zweiten Kontaktmaterials mit der Deckelfläche verbunden werden, wie dies oben bezüglich der Verbindung der ersten Elektrodenfolie mittels des ersten Kontaktmaterials mit der Bodenfläche beschrieben wurde.

Gemäß zumindest einer Ausführungsform des weiteren Herstellungsverfahrens nach dem verbesserten Konzept wird der Folienwickel, insbesondere nachdem die zweite Elektrodenfolie stoffschlüssig mit dem zweiten Kontaktmaterial verbunden wurde, mit dem ersten axialen Ende des Folienwickels voran in das Zellengehäuse eingeführt.

Dieser Verfahrensschritt des weiteren Herstellungsverfahrens kann auch dem weiter oben beschriebenen entsprechenden Verfahrensschritt des Herstellungsverfahrens entsprechen.

Gemäß zumindest einer Ausführungsform wird der Rumpfkörper beziehungsweise wird das Zellengehäuse nach dem Einführen des Folienwickels mit der Deckelkomponente verbunden, um das Zellengehäuse zu verschließen.

Beispielsweise kann dabei ein Isolationselement zwischen dem Rumpfkörper und der Deckelkomponente angeordnet werden, um diese elektrisch voneinander zu isolieren.

Gemäß dem verbesserten Konzept wird auch eine Batteriezelle angegeben, die insbesondere gemäß einem Herstellungsverfahren und/oder einem weiteren Herstellungsverfahren nach dem verbesserten Konzept hergestellt wurde. Die Batteriezelle weist ein Zellengehäuse und ein im Inneren des Zellengehäuses auf einer Bodenfläche des Zellengehäuses angeordnetes elektrisch leitfähiges erstes Kontaktmaterial auf und/oder ein im Inneren des Zellengehäuses auf einer Deckelfläche des Zellengehäuses angeordnetes elektrisch leitfähiges zweites Kontaktmaterial auf. Die Batteriezelle weist einen Folienwickel mit einer ersten und einer zweiten Elektrodenfolie auf. Die erste Elektrodenfolie ist an einem ersten axialen Ende des Folienwickels stoffschlüssig mit dem ersten Kontaktmaterial direkt verbunden und das erste Kontaktmaterial verbindet die erste Elektrodenfolie, insbesondere direkt, elektrisch mit dem Zellengehäuse, insbesondere der Bodenfläche und/oder die zweite Elektrodenfolie ist an einem zweiten, dem ersten axialen Ende des Folienwickels gegenüberliegenden, zweiten axialen Ende des Folienwickels stoffschlüssig mit dem zweiten Kontaktmaterial direkt verbunden und das zweite Kontaktmaterial verbindet die zweite Elektrodenfolie, insbesondere direkt, elektrisch mit dem Zellengehäuse, insbesondere der Deckelkomponente, insbesondere der Deckelfläche.

Die bezüglich der Herstellungsverfahren beschriebenen Vorteile übertragen sich auf die Batteriezelle nach dem verbesserten Konzept.

Gemäß zumindest einer Ausführungsform der Batteriezelle liegt das erste Kontaktmaterial als gehärtetes oder ausgehärtetes, vormals flüssiges oder pastöses, Material vor.

Gemäß zumindest einer Ausführungsform liegt das erste Kontaktmaterial als Lotmaterial vor, welches vor einem Lötvorgang zum Verbinden mit der ersten Elektrodenfolie als festes Lötplättchen vorlag.

Gemäß zumindest einer Ausführungsform weist das Zellengehäuse eine Deckelkomponente, beispielsweise eine napfförmige oder zylindrische Deckelkomponente, auf, die beispielsweise auf den Rumpfkörper des Zellengehäuses geschoben ist.

Gemäß zumindest einer Ausführungsform der Batteriezelle ist zwischen dem Rumpfkörper und der Deckelkomponente ein Isolationselement, beispielsweise ein Isolatorring, zur elektrischen Isolierung der Deckelkomponente von dem Rumpfkörper, angeordnet.

Gemäß zumindest einer Ausführungsform ist die Batteriezelle als Lithium-Ionen-Zelle, insbesondere als Lithium-Ionen-Akkumulator, ausgestaltet.

Gemäß zumindest einer Ausführungsform ist die Batteriezelle ohne Stromabnehmerstreifen ausgestaltet, also ohne Taps (englisch: "tapless design").

Gemäß zumindest einer Ausführungsform der Batteriezelle steht die erste Elektrodenfolie in einem vorgegebenen ersten axialen Endbereich des Folienwickels beziehungsweise der ersten Elektrodenfolie über die zweite Elektrodenfolie über.

Gemäß zumindest einer Ausführungsform steht die zweite Elektrodenfolie in einem vorgegebenen zweiten axialen Endbereich des Folienwickels beziehungsweise der zweiten Elektrodenfolie über die erste Elektrodenfolie über.

Gemäß zumindest einer Ausführungsform weist die erste Elektrodenfolie eine erste elektrisch leitfähige Trägerfolie auf sowie ein erstes Aktivmaterial, das beidseitig auf der ersten Trägerfolie als jeweilige Schicht angeordnet ist.

Gemäß zumindest einer Ausführungsform weist die zweite Elektrodenfolie eine zweite elektrisch leitfähige Trägerfolie auf sowie ein zweites Aktivmaterial, das beidseitig auf der zweiten Trägerfolie als jeweilige Schicht angeordnet ist.

Die Schichten aus den Aktivmaterialien sind dabei nicht notwendigerweise zusammenhängend.

Die Trägerfolien können beispielsweise jeweils ein Metall oder eine Metalllegierung beinhalten. Beispielsweise enthält eine der Trägerfolien, insbesondere die erste Trägerfolie, Aluminium oder eine Aluminiumlegierung oder besteht aus Aluminium beziehungsweise der Aluminiumlegierung. Beispielsweise enthält eine der Trägerfolien, insbesondere die zweite Elektrodenfolie, Kupfer oder eine Kupferlegierung enthalten beziehungsweise besteht aus Kupfer oder der Kupferlegierung.

Gemäß zumindest einer Ausführungsform ist die erste Trägerfolie in dem ersten axialen Endbereich frei von dem ersten Aktivmaterial und/oder die zweite Trägerfolie ist in dem zweiten axialen Endbereich frei von dem zweiten Aktivmaterial.

Mit anderen Worten erstrecken sich die Aktivmaterialien auf den gegenüberliegenden Oberflächen der jeweiligen Trägerfolie in einem jeweiligen Bereich, der den ersten beziehungsweise den zweiten axialen Endbereich nicht enthält.

Mit anderen Worten liegt die erste Trägerfolie in dem ersten axialen Endbereich frei und/oder die zweite Trägerfolie liegt in dem zweiten axialen Endbereich frei. Mit anderen Worten steht die erste Trägerfolie in direktem Kontakt mit dem ersten Kontaktmaterial und/oder die zweite Trägerfolie steht in direktem Kontakt mit dem zweiten Kontaktmaterial.

Gemäß zumindest einer Ausführungsform ist ein Separator zwischen der ersten Elektrodenfolie und der zweiten Elektrodenfolie angeordnet, insbesondere in einem Bereich, in dem sich das erste oder das zweite Aktivmaterial befindet.

Gemäß zumindest einer Ausführungsform ist der Separator im abgewickelten Zustand des Folienwickels zwischen den Elektrodenfolien angeordnet.

Gemäß zumindest einer Ausführungsform enthält der Folienwickel einen weiteren Separator zwischen den Elektrodenfolien.

Im abgewickelten Zustand des Folienwickels ist der weitere Separator beispielsweise auf einer dem Separator abgewandten Seite der ersten Elektrodenfolie oder einer dem Separator abgewandten Seite der zweiten Elektrodenfolie angeordnet.

Gemäß zumindest einer Ausführungsform enthält das erste Kontaktmaterial ein erstes Trägermaterial und in dem ersten Trägermaterial eingebettete elektrisch leitfähige erste Partikel.

Gemäß zumindest einer Ausführungsform enthält das zweite Kontaktmaterial ein zweites Trägermaterial und in dem zweiten Trägermaterial eingebettete elektrisch leitfähige zweite Partikel.

Das Trägermaterial kann auch als Matrixmaterial bezeichnet werden.

Das Trägermaterial kann beispielsweise ein Polymermaterial beinhalten.

Die elektrisch leitfähigen Partikel können auch als Granulat, Pulver oder Staub, gegebenenfalls in aufgeschmolzenen oder teilweise geschmolzenen Zustand verstanden werden.

Gemäß zumindest einer Ausführungsform enthalten die ersten und/oder die zweiten Partikel ein Metall oder bestehen aus dem Metall.

Je nach elektrochemischem System das für die Batteriezelle verwendet wird, also insbesondere je nachdem, welche Aktivmaterialien verwendet werden, können gegebenenfalls unterschiedliche Metalle verwendet werden, die elektrochemisch mit den Lade- und Entladevorgängen in der Batteriezelle nicht oder nicht signifikant wechselwirken. Beispielsweise können Edelmetalle eingesetzt werden.

Gemäß zumindest einer Ausführungsform enthalten die ersten und/oder die zweiten Partikel ein Kohlenstoffmaterial oder bestehen aus dem elektrisch leitfähigen Kohlenstoffmaterial.

Dies hat den Vorteil, dass das das Kohlenstoffmaterial in Kombination mit verschiedenen Aktivmaterialien eingesetzt werden kann.

Das elektrisch leitfähige Kohlenstoffmaterial enthält beispielsweise Graphit, Graphen und/oder Kohlenstoffnanoröhrchen.

Gemäß zumindest einer Ausführungsform beinhaltet das erste Kontaktmaterial und/oder das zweite Kontaktmaterial ein Lotmaterial.

Das Lotmaterial kann beispielsweise als Lotpaste, Lotplättchen oder Lotvorlage ausgestaltet sein, insbesondere als Edelmetalllotmaterial.

Gemäß zumindest einer Ausführungsform liegt das erste Kontaktmaterial und/oder das zweite Kontaktmaterial in der Batteriezelle als aufgeschmolzenes und wieder erstarrtes oder als gesintertes Material vor.

Gemäß zumindest einer Ausführungsform enthält das erste Kontaktmaterial und/oder enthält das zweite Kontaktmaterial einen Klebstoff.

Weitere Ausführungsformen der Batteriezelle nach dem verbesserten Konzept folgen unmittelbar und direkt aus den verschiedenen Ausgestaltungsformen des Herstellungsverfahrens und des weiteren Herstellungsverfahrens nach dem verbesserten Konzept und jeweils umgekehrt.

In den Figuren zeigen:
- Fig. 1: schematisch den Aufbau eines Folienwickels für eine Batteriezelle;
- Fig. 2: eine schematische Schnittdarstellung durch eine beispielhafte Ausführungsform einer Batteriezelle nach dem verbesserten Konzept;
- Fig. 3: eine Anordnung von Elektrodenfolien und Separatoren in einem Folienwickel zur Verwendung in einer weiteren beispielhaften Ausführungsform einer Batteriezelle nach dem verbesserten Konzept; und
- Fig. 4: ein Ablaufdiagramm einer beispielhaften Ausführungsform eines Herstellungsverfahrens sowie einer beispielhaften Ausführungsform eines weiteren Herstellungsverfahrens nach dem verbesserten Konzept.

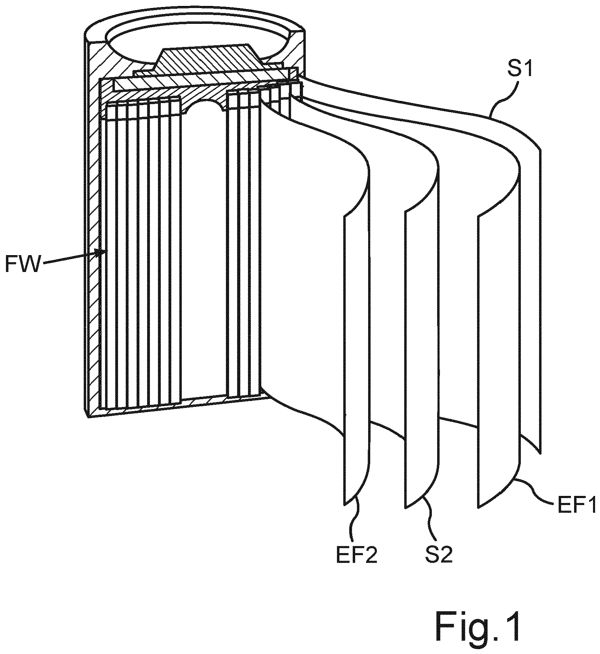

Fig. 1 zeigt schematisch den Aufbau eines Batteriewickels einer Lithium-Ionen-Batteriezelle.

Der Folienwickel FW enthält vier übereinander angeordnete und beispielsweise mittels eines einem zylindrischen Wickeldorns aufgewickelte Komponenten S1, S2, EF1, EF2.

Im abgewickelten Zustand sind beispielsweise ein Separator S1, eine erste Elektrodenfolie EF1, ein zweiter Separator S2 und eine zweite Elektrodenfolie EF2 in der genannten Reihenfolge übereinander angeordnet und werden dann aufgewickelt.

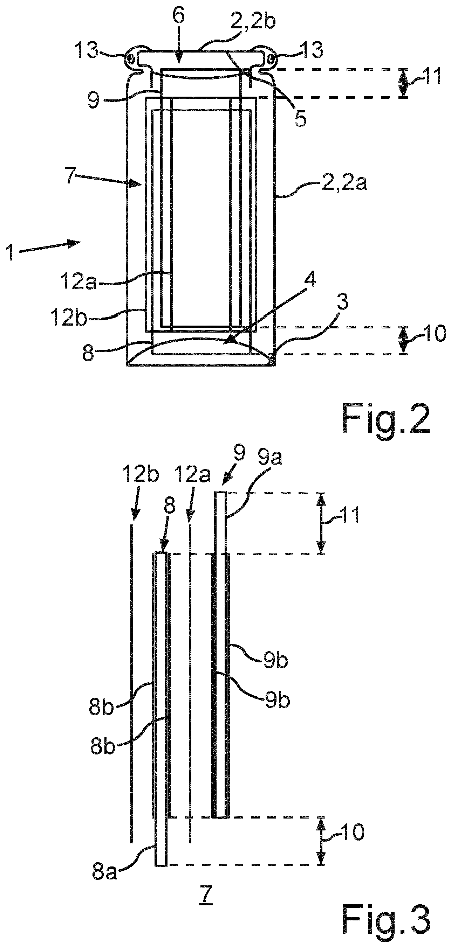

In Fig. 2 ist schematisch eine Schnittdarstellung durch eine beispielhafte Ausführungsform einer Batteriezelle nach dem verbesserten Konzept gezeigt.

Die Batteriezelle 1 weist ein Zellengehäuse 2 auf, das einen zylindrischen Rumpfkörper 2a und eine Deckelkomponente 2b enthält. Der Rumpfkörper 2a ist an einem axialen Ende des zylindrischen Mantels durch eine Bodenfläche 3 geschlossen. An einem gegenüberliegenden Ende ist der Rumpfkörper 2a selbst offen und wird durch die Deckelkomponente 2b verschlossen.

Sowohl die Bodenfläche 3 als auch eine Deckelfläche 5 der Deckelkomponente 2b sind elektrisch leitfähig. Daher weist die Batteriezelle 1 beispielsweise einen Isolatorring 13 auf, der zwischen der Deckelkomponente 2b und dem Rumpfkörper 2a angeordnet ist, um die Deckelkomponente 2b von dem Rumpfkörper 2a elektrisch zu isolieren.

Die Batteriezelle 1 weist auch einen Folienwickel 7 auf. An einem ersten axialen Ende des Folienwickels 7 ist der Folienwickel 7 stoffschlüssig mit einem ersten Kontaktmaterial 4 verbunden und dadurch elektrisch mit dem Rumpfkörper 2a an der Bodenfläche 3 verbunden.

Optional kann der Folienwickel 7 an einem dem ersten axialen Ende gegenüberliegenden zweiten axialen Ende des Folienwickels 7 über ein zweites elektrisch leitfähiges Kontaktmaterial 6 mit der Deckelkomponente 2b an der Deckelfläche stoffschlüssig verbunden sein, insbesondere um den Folienwickel 7 elektrisch mit der Deckelkomponente 2b zu verbinden.

Der Folienwickel 7 weist dabei insbesondere eine erste Elektrodenfolie 8 und eine zweite Elektrodenfolie 9 auf. Das erste Kontaktmaterial 4 steht dabei mit der ersten Elektrodenfolie 8 in direktem Kontakt und ist nicht elektrisch mit der zweiten Elektrodenfolie 9 verbunden. Das zweite Kontaktmaterial 6 ist entsprechend nicht mit der ersten Elektrodenfolie elektrisch verbunden und steht mit der zweiten Elektrodenfolie in direktem Kontakt.

Der Aufbau des Folienwickels 7 ist in Fig. 3 nicht notwendigerweise maßstabsgetreu genauer dargestellt. Fig. 3 kann als Schnittdarstellung durch den Folienwickel 7 im abgewickelten Zustand verstanden werden.

Die erste Elektrodenfolie 8 enthält eine erste Trägerfolie 8a, beispielsweise eine Aluminiumfolie, sowie beidseitig auf der ersten Trägerfolie 8a angeordnet ein erstes Aktivmaterial 8b. Dabei ist die erste Trägerfolie 8a in einem ersten axialen Endbereich 10 des Folienwickels 7 frei von dem ersten Aktivmaterial 8b, sodass das erste Kontaktmaterial 4 an dem ersten axialen Endbereich 10 in direktem elektrischen Kontakt mit der ersten Trägerfolie 8a steht und mit dieser stoffschlüssig verbunden ist.

Die zweite Elektrodenfolie 9 enthält eine zweite Trägerfolie 9a, beispielsweise eine Kupferfolie, sowie beidseitig auf der zweiten Trägerfolie 9a angeordnet ein erstes Aktivmaterial 9b. Dabei ist die erste Trägerfolie 8a in einem zweiten axialen Endbereich 11 des Folienwickels 7 frei von dem zweiten Aktivmaterial 9b, sodass das zweite Kontaktmaterial 6 an dem zweiten axialen Endbereich 11 in direktem elektrischen Kontakt mit der zweiten Trägerfolie 9a steht und mit dieser stoffschlüssig verbunden ist.

Die erste und die zweite Elektrodenfolie 8, 9 sind dabei axial versetzt zueinander angeordnet, sodass die erste Elektrodenfolie 8 in dem ersten axialen Endbereich 10 über die zweite Elektrodenfolie 9 übersteht und die zweite Elektrodenfolie 9 in dem zweiten axialen Endbereich 11 über die erste Elektrodenfolie 8 übersteht.

In den Bereichen, in denen die erste und die zweite Elektrodenfolie 8, 9 einander überlappen sind die jeweiligen Oberflächen der ersten und der zweiten Trägerfolie 8a, 8b beispielsweise durchgängig mit den jeweiligen Aktivmaterialien 8b, 9b beschichtet.

Der Folienwickel 7 weist einen Separator 12a auf, der zwischen der ersten Elektrodenfolie 8 und der zweiten Elektrodenfolie 9 angeordnet ist. Insbesondere ist der Separator 12a derart zwischen den Elektrodenfolien 8, 9 angeordnet, dass die entsprechenden einander zugewandten Teile der Aktivmaterialien 8b, 9b nicht in direktem Kontakt stehen. Ein weiterer Separator 12b des Folienwickels 7 ist auf einer dem Separator 12a abgewandten Seite der ersten Elektrodenfolie 8 beziehungsweise auf einer dem Separator 12a abgewandten Seite der zweiten Elektrodenfolie 9 angeordnet. Im abgewickelten Zustand befindet sich auch der weitere Separator 12b zwischen den Elektrodenfolien 8, 9, wie in Fig. 2 ersichtlich ist.

Die Batteriezelle 1 kann beispielsweise mittels eines Herstellungsverfahrens beziehungsweise eines weiteren Herstellungsverfahrens nach dem verbesserten Konzept hergestellt sein.

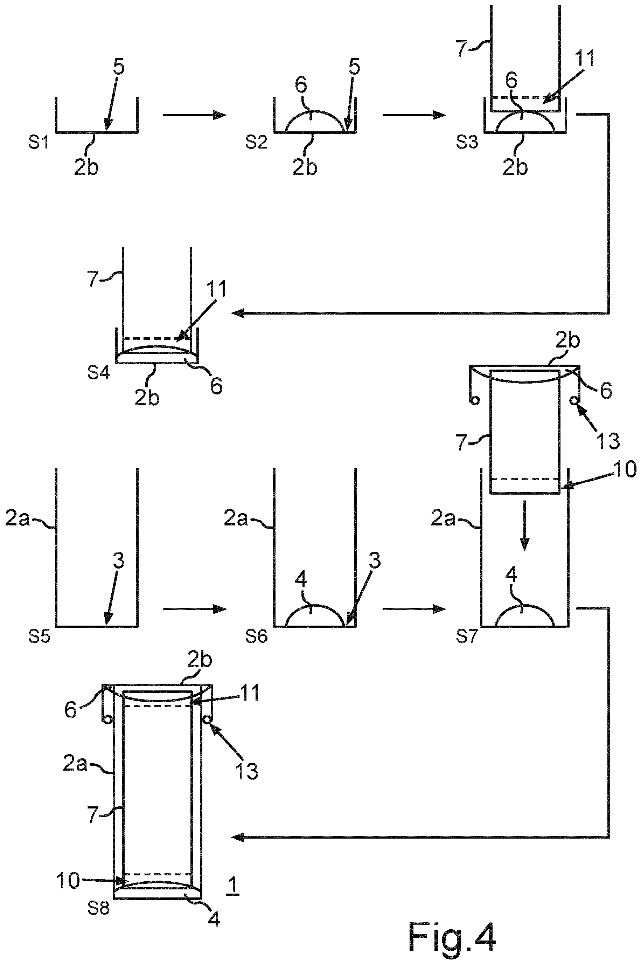

Solche Herstellungsverfahren sind in Fig. 4 ist als Ablaufdiagramm dargestellt.

In Schritt S1 wird die Deckelkomponente 2b bereitgestellt und in Schritt S2 wird das zweite elektrisch leitfähige Kontaktmaterial 6 in die Deckelkomponente 2b, insbesondere auf der Deckelfläche 5, eingebracht. Das zweite Kontaktmaterial 6 kann beispielsweise als Metallpaste, Lotpaste oder Kunststoffmaterial mit einer Polymermatrix und darin eingebetteten leitfähigen metallischen Partikeln oder Kohlenstoffpartikeln in die Deckelkomponente 2b eingebracht werden. Alternativ kann das zweite Kontaktmaterial 6 auch als Lotplättchen oder sonstige Lotvorlage eingebracht werden.

In Schritt S3 wird der Folienwickel 7 mit dem zweiten axialen Endbereich 11 voran mit dem zweiten Kontaktmaterial 6 in Kontakt gebracht. Je nach Ausgestaltung des zweiten Kontaktmaterials 6, insbesondere je nachdem ob das zweite Kontaktmaterial 6 fest, flüssig oder pastös ist, kann der Folienwickel 7 dabei gegebenenfalls teilweise in das zweite Kontaktmaterial 6 eindringen.

In Schritt S4 wird das zweite Kontaktmaterial 6 von außerhalb der Deckelkomponente 2b erhitzt, beispielsweise induktiv oder mittels einer Heizplatte. Optional kann das erste Kontaktmaterial beziehungsweise der Folienwickel 7 nach dem Erhitzen aktiv gekühlt werden, um ein zu starkes Erhitzen der Aktivmaterialien 8b, 9b zu vermeiden.

In Schritt S5 wird der Rumpfkörper 2a bereitgestellt und in Schritt S6 wird das erste Kontaktmaterial 4 in den Rumpfkörper 2a eingebracht, insbesondere auf die Bodenfläche 3 gebracht. Hinsichtlich der Materialien für das erste Kontaktmaterial 4 gilt das oben für das zweite Kontaktmaterial 6 erläuterte analog.

In Schritt S7 wird der Folienwickel 7, der wie oben beschrieben beispielsweise mit der Deckelkomponente 2b über das zweite Kontaktmaterial 6 verbunden ist, mit dem ersten axialen Endbereich 10 voran in den Rumpfkörper 2a eingeführt und mit dem ersten Kontaktmaterial 4 in Verbindung gebracht. Analog wie oben beschrieben wird im Schritt S8 das erste Kontaktmaterial 4 von außerhalb des Zellengehäuses 2 erhitzt, um das erste Kontaktmaterial 4 stoffschlüssig mit der ersten Elektrodenfolie 8 zu verbinden.

Die Schritte S1 bis S4 müssen nicht notwendigerweise durchgeführt werden. Insbesondere kann das Verfahren auch lediglich die Schritte S5 bis S8 enthalten, wobei der Folienwickel 7 vorab oder nachträglich in einer alternativen Weise mit der Deckelkomponente 2b oder einer sonstigen Komponente des Zellengehäuses 2 verbunden wird.

Ebenso können die Schritte S1 bis S4 durchgeführt werden, ohne dass notwendigerweise die Schritte S5 bis S8 darauf folgen müssen. Insbesondere wird dann der Folienwickel 7 in einer alternativen Weise mit dem Rumpfkörper 2a verbunden.

Mit anderen Worten beinhaltet das Verfahren die beschriebene stoffschlüssige Verbindung des Folienwickels 7 mit dem ersten Kontaktmaterial 4 und/oder die stoffschlüssige Verbindung des Folienwickels 7 mit dem zweiten Kontaktmaterial 6.

Wie beschrieben wird es durch das verbesserte Konzept erreicht, eine Batteriezelle mit reduzierter Gesamtimpedanz herzustellen und gleichzeitig eine gute Wärmeabfuhr aus dem Folienwickel zu gewährleisten.

### BEZUGSZEICHENLISTE:

- 1: Batteriezelle
- 2: Zellengehäuse
- 2a: Rumpfkörper
- 2b: Deckelkomponente
- 3: Bodenfläche
- 4: Kontaktmaterial
- 5: Deckelfläche
- 6: Kontaktmaterial
- 7: Folienwickel
- 8: Elektrodenfolie
- 8a: Trägerfolie
- 8b: Aktivmaterial
- 9: Elektrodenfolie
- 9a: Trägerfolie
- 9b: Aktivmaterial
- 10,11: axiale Endbereiche
- 12a,12b: Separatoren
- 13: Isolatorring
- S1 bis S8: Verfahrensschritte

## Patentansprüche

1. Herstellungsverfahren für eine Batteriezelle (1), wobei
- in einem ersten Schritt ein elektrisch leitfähiges erstes Kontaktmaterial (4) im Inneren eines Zellengehäuses (2) auf einer Bodenfläche (3) des Zellengehäuses (2) angeordnet wird;
- in einem zweiten Schritt nach dem ersten Schritt ein Folienwickel (7) mit einem ersten axialen Ende des Folienwickels (7) voran in das Zellengehäuse (2) eingeführt wird, sodass eine erste Elektrodenfolie (8) des Folienwickels (7) an dem ersten axialen Ende in direktem Kontakt mit dem ersten Kontaktmaterial (4) steht; und
- in einem dritten Schritt nach dem zweiten Schritt das erste Kontaktmaterial (4) stoffschlüssig mit der ersten Elektrodenfolie (8) verbunden wird, um die erste Elektrodenfolie (8) elektrisch mit dem Zellengehäuse (2) zu verbinden.

2. Herstellungsverfahren nach Anspruch 1,
- die erste Elektrodenfolie (8) und eine zweite Elektrodenfolie (9) des Folienwickels (7) übereinander angeordnet werden, sodass die erste Elektrodenfolie (8) an einer dem ersten axialen Ende des Folienwickels (7) entsprechenden Seite über die zweite Elektrodenfolie (9) übersteht; und
- die übereinander angeordneten Elektrodenfolien (8, 9) gemeinsam aufgewickelt werden, um den Folienwickel (7) zu fertigen.

3. Herstellungsverfahren nach einem der Ansprüche 1 oder 2, wobei das erste Kontaktmaterial (4) von außerhalb des Zellengehäuses (2) erhitzt wird, um das erste Kontaktmaterial (4) stoffschlüssig mit der ersten Elektrodenfolie (8) zu verbinden.

4. Herstellungsverfahren nach Anspruch 3, wobei eine Metallkomponente des ersten Kontaktmaterials (4) durch das Erhitzen geschmolzen oder gesintert wird.

5. Herstellungsverfahren nach Anspruch 3, wobei eine Polymerkomponente des ersten Kontaktmaterials (2) durch das Erhitzen geschmolzen wird.

6. Herstellungsverfahren nach Anspruch 3, wobei das erste Kontaktmaterial (4) als Klebstoff ausgestaltet ist und durch das Erhitzen gehärtet wird.

7. Herstellungsverfahren für eine Batteriezelle, wobei
- in einem ersten Schritt ein elektrisch leitfähiges zweites Kontaktmaterial (5) auf einer inneren Deckelfläche (5) einer Deckelkomponente (2b) zum Verschließen eines Zellengehäuses (2) angeordnet wird;
- in einem zweiten Schritt nach dem ersten Schritt eine zweite Elektrodenfolie (9) eines Folienwickels (7) an einem zweiten axialen Ende des Folienwickels (7) in direkten Kontakt mit dem zweiten Kontaktmaterial (5) gebracht wird; und
- in einem dritten Schritt nach dem zweiten Schritt das zweite Kontaktmaterial (5) stoffschlüssig mit der zweiten Elektrodenfolie (9) verbunden wird, um die zweite Elektrodenfolie (9) elektrisch mit der Deckelkomponente (2b) zu verbinden.

8. Herstellungsverfahren nach Anspruch 7, wobei
der Folienwickel (7) mit einem ersten axialen Ende des Folienwickels (7), welches dem zweiten axialen Ende gegenüber liegt, voran in das Zellengehäuse (2) eingeführt wird.

9. Batteriezelle, insbesondere hergestellt gemäß einem Verfahren nach einem der Ansprüche 1 bis 6 und/oder gemäß einem Verfahren nach einem der Ansprüche 7 oder 8, die Batteriezelle aufweisend
- ein Zellengehäuse (2) und ein im Inneren des Zellengehäuses (2) auf einer Bodenfläche (3) des Zellengehäuses (2) angeordnetes elektrisch leitfähiges erstes Kontaktmaterial (4) und/oder ein im Inneren des Zellengehäuses (2) auf einer Deckelfläche (5) des Zellengehäuses (2) angeordnetes elektrisch leitfähiges zweites Kontaktmaterial (6);
- einen Folienwickel (7) mit einer ersten Elektrodenfolie (8) und einer zweiten Elektrodenfolie (9),
- wobei die erste Elektrodenfolie (8) an einem ersten axialen Ende des Folienwickels (7) stoffschlüssig mit dem ersten Kontaktmaterial (4) direkt verbunden ist und das erste Kontaktmaterial (4) die erste Elektrodenfolie (8) elektrisch mit dem Zellengehäuse (2) verbindet; und/oder
- wobei die zweite Elektrodenfolie (9) an einem zweiten axialen Ende des Folienwickels (7) stoffschlüssig mit dem zweiten Kontaktmaterial (6) direkt verbunden ist und das zweite Kontaktmaterial (6) die zweite Elektrodenfolie (9) elektrisch mit dem Zellengehäuse (2) verbindet.

10. Batteriezelle nach Anspruch 9, wobei
- in einem vorgegebenen ersten axialen Endbereich (10) an dem ersten axialen Ende die erste Elektrodenfolie (8) axial über die zweite Elektrodenfolie (9) übersteht; und/oder
- in einem vorgegebenen zweiten axialen Endbereich (11) an dem zweiten axialen Ende die zweite Elektrodenfolie (9) axial über die erste Elektrodenfolie (8) übersteht.

11. Batteriezelle nach einem der Ansprüche 9 oder 10, wobei
- die erste Elektrodenfolie (8) eine erste Trägerfolie (8a) aufweist sowie ein erstes Aktivmaterial (8b), das beidseitig auf der ersten Trägerfolie (8a) als jeweilige Schicht angeordnet ist; und
- die zweite Elektrodenfolie (9) eine zweite Trägerfolie (9a) aufweist sowie ein zweites Aktivmaterial (9b), das beidseitig auf der zweiten Trägerfolie (9a) als jeweilige Schicht angeordnet ist.

12. Batteriezelle gemäß Anspruch 10 und Anspruch 11, wobei
- die erste Trägerfolie (8a) in dem ersten axialen Endbereich (10) frei von dem ersten Aktivmaterial ist (8b); und/oder
- die zweite Trägerfolie (9a) in dem zweiten axialen Endbereich (11) frei von dem zweiten Aktivmaterial (9b) ist.

13. Batteriezelle nach einem der Ansprüche 9 bis 12, wobei
- das erste Kontaktmaterial (4) ein erstes Trägermaterial und in dem ersten Trägermaterial eingebettete elektrisch leitfähige erste Partikel enthält; und oder
- das zweite Kontaktmaterial (5) ein zweites Trägermaterial und in dem zweiten Trägermaterial eingebettete elektrisch leitfähige zweite Partikel enthält.

14. Batteriezelle nach Anspruch 13, wobei die ersten und/oder die zweiten Partikel ein Metall und/oder ein Kohlenstoffmaterial beinhalten.

15. Batteriezelle nach einem der Ansprüche 9 bis 12, wobei das erste Kontaktmaterial (4) und/oder das zweite Kontaktmaterial (5) ein Lotmaterial beinhaltet.
